# EUROPEAN PATENT SPECIFICATION

(11) **EP 1 397 898 B1**
(45) Date of publication and mention of the grant of the patent: **11.04.2007**
(21) Application number: 03705596.9
(22) Date of filing: 14.02.2003
(51) Int. Cl.: H04L 29/00, H04Q 7/00, G06F 15/16

(54) **A METHOD FOR DISTRIBUTING INFORMATION IN A PRESENCE SERVICE SYSTEM**
VERFAHREN ZUM VERTEILEN VON INFORMATIONEN IN EINEM PRÄSENZDIENSTSYSTEM
PROCEDE DE DISTRIBUTION D'INFORMATIONS DANS UN SYSTEME DE SERVICE DE PRESENCE

(30) Priority: 15.02.2002 SE 0200451; 28.02.2002 US 360105 P
(43) Date of publication of application: 17.03.2004
(73) Proprietor: Oracle International Corporation, Redwood Shores, CA 94065 (US)
(72) Inventor: VÁSQUEZ, Marcela, S-118 26 STOCKHOLM (SE)
(74) Representative: Herbjörnsen, Rut
(86) International application number: PCT/SE2003/000247
(87) International publication number: WO 2003/069869

(56) References cited:
- EP-A1- 1 130 869
- WO-A1-01/93047
- WO-A1-02/05534
- WO-A2-01/56308
- WO-A2-02/39692
- US-A1- 2002 035 605
- US-B1- 6 301 609

## Description

### TECHNICAL FIELD OF THE INVENTION

The present invention relates to a method for distributing messages in a presence service system to which at least one sender and at least one receiver are connected directly or through another presence service system.

It also relates to a matching means connectable to at least one Presence Server in a presence service system to which at least one sender and at least one receiver are connected directly or through another Presence Server.

Furthermore the invention relates to a presence service system comprising at least one Service Provider and at least one sender and at least one receiver both connected to the presence service system directly or through another Service Provider.

### RELATED ART

A presence service is a network service where subscribers to the service easily can inform each other about their availability and their willingness to communicate. Each subscriber has a list, called a buddy list, comprising presence addresses of the other subscribers he wants to have presence information from. The buddy list is located in and managed by a presence client which is installed in a terminal used by the subscriber.

The presence addresses point to some kind of presence system from which presence information about the concerned subscribers is retrieved. The presence system could be a presence server, which keeps updated information about the presence states of the subscribers having a presence address pointing to this presence server. Alternatively the presence information could be fetched directly from the terminal software. In this case the presence addresses point directly to the terminal software.

When a subscriber to the service wants to change his/her presence state he uses some kind of input means provided by the presence client. This change is forwarded to the presence system to which the presence address is pointing, for example a presence server. The presence states could be for example "present", "not present" (the same as not connected to the network) or "present but unwilling to communicate". The presence server notifies subscribers who have subscribed for presence information from this person. The notification comprises information about the changed presence state. However, only subscribers who are accepted by this person to receive her/his presence information will get the information. The subscribers can be connected to different Presence Servers and still subscribing for each other's presence. In this case the Presence Servers are forwarding changes in present states to the other concerned Presence Servers.

The presence information is for example presented as icons on the subscribers displays. The icons could possibly also be accompanied by a text given by the user. The text could be information about the reason for a "not present" state. The presence information could also comprise information about for example which device the subscriber is present on, if the subscriber is online or offline, the location of the subscriber, if the subscriber is busy on phone, how the subscriber wants to be contacted (voice, text, video, etc.), the mood of the subscriber and so on. All these different possibilities of content in a presence information will hereafter be called the presence context.

### A presence service is disclosed in for example WO 01/56308

The invention relates further to messaging. Today's messaging include for example SMS (Short Message Service), Instant Messages, EMS (Enhanced Messaging Service) and Multimedia Messaging where messages include both sounds, pictures and other file types. These can be sent to signal or multiple receivers and are delivered instantly or stored for later delivery. Messages can be sent through different networks, e.g. GSM (Global System for Mobile Communications), GPRS (General Packet Radio Service), Internet, and to and from different terminals, e.g. PCs (Personal Computers), PDAs (Personal Digital Assistants) and mobile phones.

### SUMMARY

An object of the invention is to improve the presence service.

A further object of the invention is to provide a presence service where a sender of a message can prescribe under which conditions the message should be shown for the receiver(s).

These objects are achieved in a method as initially described having the characterising features of claim 1.

The objects are also achieved by a matching means as initially described having the characterising features of claim 6.

The objects are furthermore achieved in a presence service system as initially described where the service provider comprises such a matching means.

With this method, matching means and presence service system it is possible to tie a message to certain conditions in the sender's and/or the receiver's presence context. I.e. distribute a message only when the receiver and/or the sender meet certain prescribed conditions regarding for example location or availability or other types of presence context.

Suitably both the sender and the receiver(s) subscribe for each other's presence. The sender has then accepted that the receivers subscribe for his/her presence and vice verse, i.e. authentication of receivers and sender is solved using an existing presence service.

Preferably the message is distributed to the receiver(s) having the requested presence context.

In one embodiment the message is distributed by showing it for the receiver in the presence representation of the sender.

In another embodiment the distributing of the message comprises providing the message to be sent to the receiver as for example a SMS, an instant message or an e-mail through any kind of network.

Further advantageous embodiments are set out in the dependent claims.

### BRIEF DESCRIPTION OF THE DRAWINGS

Fig. 1 shows a network where a presence service according to one embodiment of the invention is used.
Fig. 2 is a schematic view of a matching means according to one embodiment of the invention.
Fig. 3 is a flowchart of one embodiment of the invention.

### DETAILED DESCRIPTION OF EMBODIMENTS

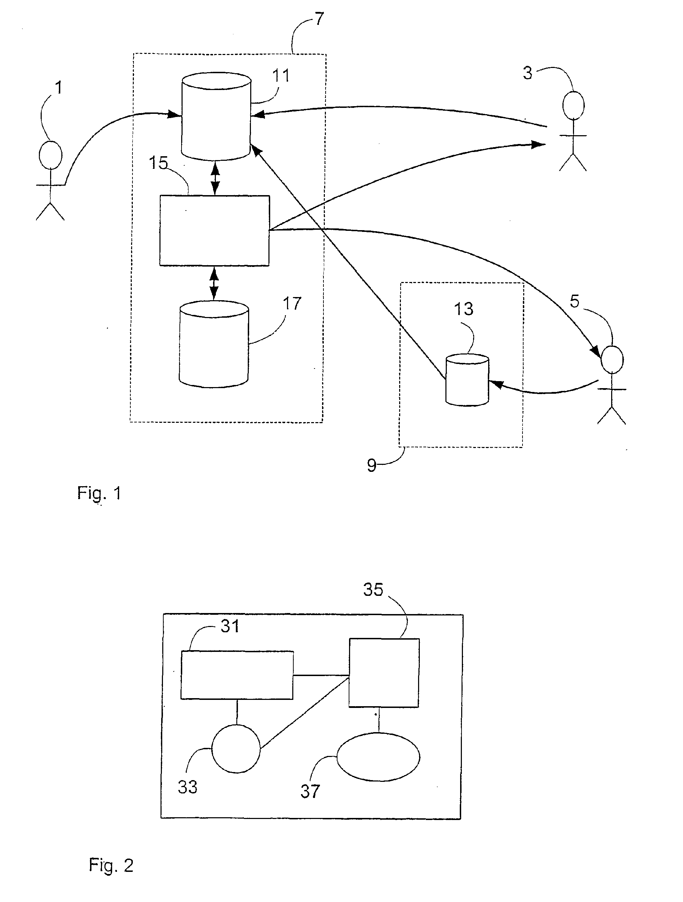

Fig. 1 shows a network where a presence service according to one embodiment of the invention is used. One sender 1 and a first and a second receiver 3, 5 are shown. In this embodiment the sender 1 subscribes for the presence of both the first and the second receivers 3,5 and both the first and the second receivers 3,5 subscribe for the presence of the sender 1. The sender 1 subscribes to a presence service from a first service provider 7. The first receiver 3 also subscribes to the presence service from the first service provider 7 but the second receiver 5 subscribes to a presence service from a second service provider 9. The first service provider 7 comprises a first Presence Server 11 and the second service provider 9 comprises a second Presence Server 13. The first and second Presence Servers 11, 13 can communicate and forward information about the presence contexts for the different subscribers.

According to the invention the first Service Provider 7 further comprises a matching means 15, which is connected to or incorporated in the first Presence Server 11. A data base 17 connected to the matching means 15 is also provided in the first Service Provider 7. According to the invention the sender 1 sends a message together with a claim specification to the first presence server 11. Said claim specification determines under which conditions in the presence context of the receiver and/or the sender the message shall be distributed. This message and the claim specification are stored in the data base 17 in the first Service Provider 7.

The claim specification could both specify conditions in the sender's presence context and conditions in the receiver's presence context. For example the receiver may have to have a certain location or a certain mood to receive the message. The distribution of the message could also be restricted to be performed when the sender's presence context matches the claim specification. For example the sender 1 may have to be at home when the receiver passes the sender's home if a message shall be sent to the receiver asking him to come in.

The matching means 15 compares the presence context of receivers who are subscribing for the sender's presence and who's presence the sender also subscribes for with the claim specification stored in the data base repeatedly and is responsible to distribute the message to a receiver when the receiver's presence context matches the claim specification. When the first or the second receiver 3,5 has changed their presence such that it corresponds to the claim specification a message is sent to this receiver. As said above it may also be necessary that the sender's presence context correlates with the claim specification to let the message be distributed.

The distribution of the message could be performed in different ways. One possibility is that the message becomes visible in the receiver's buddy list in connection to the sender's presence representation when the claim specification has been met, i.e. the message could be a part of the sender's presence information. In another embodiment the matching means 15 is responsible to forward the message to the receiver as an e-mail, a SMS, an instant message or as any other kind of message. The messages can be sent and received through all kinds of different networks and does not necessarily need to be a text message but can also be for example sound, picture, animation, file, telephone signal, etc. or a combination of these.

As shown in Figure 1 the receivers could be connected to both the same Service Provider 7 as the sender 1 or to another. The first and second Presence Servers 11,13 forwards presence information about the subscribers to each other.

In one preferred embodiment both the sender and the receivers have to subscribe for each others presence. The sender has then accepted that the receivers subscribe for her/his presence and vice verse, i.e. authentication of receivers and sender is solved using an existing presence service.

However it is possible to use the method of the invention also if the sender does not subscribe for the receiver's presence. In this case an addition to the receiver's presence service has to be done. The reason is that if the sender does not subscribe for the receiver's presence the receiver's presence will not automatically be sent to the sender's Presence Server where it should be matched with the claim specification. Thus the receiver's Presence Server has to know that it should send the presence context of the receiver to the sender's Presence Server anyway and the receiver has to authorize this. When both the sender and the receiver subscribe for each other's presence authorization by both parties has already been done and the involved Presence Servers exchange presence information about the subscribers.

The sender could be several senders, e.g. a group of persons leaving a message related to a presence context, and the sender could also be the same as the receiver. Suitably the sender can change or delete the stored message any time.

In one embodiment the sender is notified when a receiver receives the message. It can also be possible for the receiver to reply to the message. The reply message can either be sent directly to the sender with no matching requirements or to the sender but with the same matching requirements as for receiving the message. I.e. the sender can only receive the reply when his/her presence context matches the original claim specification for receiving the message. E.g. a receiver receives a message when her/his location matches a required location. The receiver replies to the message but the sender can only receive the reply when her/his location matches the originally required location. In this case the sender can get a notification when there is a reply.

A further variation of the invention covered in this application is that the receiver does not actually have to have the presence state required in the claim specification. It would then be enough if the receiver specifies the required presence state to the matching means.

The sender sets the claim specification by specifying it through a presence service client or interface. Alternatively the claim specification can be set automatically to be the presence context of the sender when he sends the message. E.g. by being at a certain location when sending the message the claim specification is set such that a receiver needs to be present at this location for receiving the message.

Fig. 2 is a schematic view of a matching means according to one embodiment of the invention. It comprises a receiving means 31 adapted to receive a message and a claim specification as defined above from the sender 1. The receiving means 31 is connected to a storing means 33 which is adapted to store the message and the claim specification. Suitably the message and claim specification are stored in a data base 17 as described above. Furthermore the matching means comprises a matching unit 35 which is connected to the receiving means 31 and to the storing means 33. The matching unit 35 receives the presence states for receivers who are subscribing for the sender's presence and who's presence the sender also subscribes for from the receiving means 31. If more than one sender has stored messages together with claims specifications the matching unit checks the presence context for all concerned receivers. Every time a receiver changes a presence state the change is forwarded to the matching unit. The matching unit 3 5 has access to the messages and claim specifications stored by the storing means 33 and is adapted to compare the presence contexts of the receivers and sometimes also of the sender with the claim specifications given by senders. When the presence context of a receiver fits with a stored claim specification the connected message is forwarded to a distributing means 37 connected to the matching unit 35. From there the message is distributed to the receiver. Either the message is just shown in the receiver's buddy list as the presence state of the sender or a message is sent through any network as described above.

In one embodiment one matching means can be used by more than one Presence Server. This is possible since Presence Servers in different Presence Systems exchange presence information for senders and receiver's that subscribe to each other's presence.

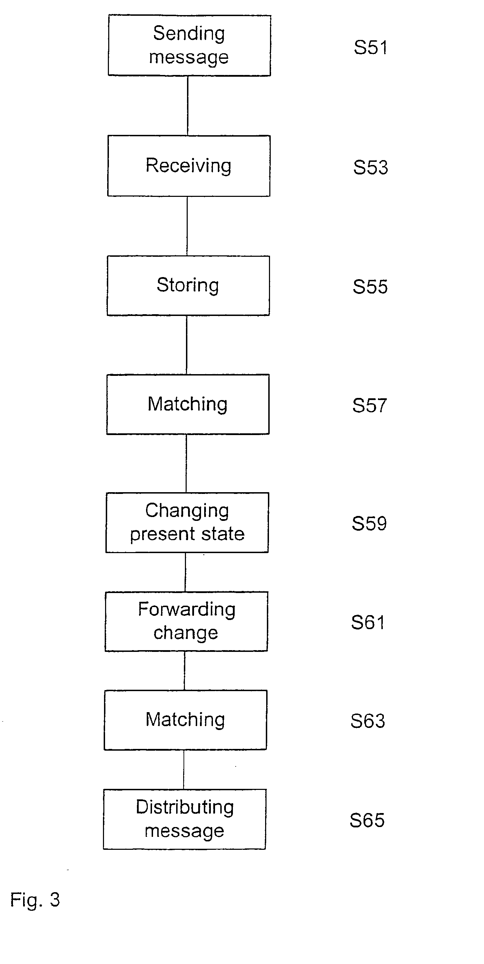

Fig. 3 is a flowchart of one embodiment of the invention. In this embodiment the sender 1 and the first receiver 3 of Figure 1 participate. They are both subscribing for each other's presence. The reference signs refer to Figure 1. The steps of the process are described below:
S51: The sender 1 sends a message together with a claim specification as defined above to the first Presence Server 11. In one specific example the claim specification requires that the receiver is at location "coffee shop". In this case the message could for example be "try the carrot cake".
553: The message and the claim specification are forwarded to the matching means 15.
S55: The message and the claim specification are stored in the data base 17.
S57: The matching means 15 compares continually the presence context of receivers subscribing for the sender's presence with the claim specification.
S59: The first receiver 3 changes presence state such that his/her presence context now matches the claim specification given by the sender 1. The change is received in the first Presence Server 11. In the example given above this is location "coffee shop".
S61: The change is forwarded to the matching means 15.
S63: The matching means 15 compares the new presence context with the claim specification provided together with the message from the sender 1. If more messages are stored in the data base 17 together with claim specifications the matching means 15 compares all the claim specifications with the different presence states of the subscribers.
S65: If the matching means 15 finds a receiver with a presence context matching the claim specification the message is distributed. In the above given example the presence context of the first receiver 3 now matches the claim specification and the message is distributed to the first receiver 3.
In one embodiment the way of distributing the message is dependent on the receiver's presence state. If the receiver is present on his/her mobile telephone the message could be sent as a SMS and if he is present on his/her computer the message could be sent as an e-mail or an instant message for example.

## Claims

1. A method for distributing messages in a presence service system to which at least one sender (1) and at least one receiver (3,5) are connected directly or through another presence service system, **characterised by** the steps of:
- sending from the sender (1) to a first Service Provider (7) a message together with a claim specification, said claim specification determining under which conditions in the presence context of the receiver and/or the sender the message shall be distributed;
- storing said message and claim specification;
- comparing the actual presence context of the receiver and/or the sender with the claim specification;
- distributing the message when the conditions in the specification are met.

2. A method according to claim 1, **characterised by** both the sender and the receiver(s) subscribing for each other's presence.

3. A method according to claim 1 or 2, **characterised by** distributing the message to the receiver(s) having the requested presence context.

4. A method according to any one of the claims 1-3, **characterised by** distributing the message by showing it for the receiver in the presence representation of the sender.

5. A method according to any one of the claims 1-3, **characterised in that** the distributing of the message comprises providing the message to be sent to the receiver as for example a SMS, an instant message or an e-mail through any kind of network.

6. A matching means connectable to at least one Presence Server (11) in a presence service system to which at least one sender (1) and at least one receiver (3,5) are connected directly or through another Presence Server (13), **characterised in that** it comprises
- a receiving means (31) adapted to receive from the sender (1) a message together with a claim specification, said claim specification determining under which conditions in the presence context of the receiver and/or the sender the message shall be distributed;
- a storing means (33) adapted to store the message and the claim specification;
- a matching unit (35) adapted to compare actual presence context of the receiver and/or the sender with the claim specification;
- a distributing means (37) adapted to distribute the message when the conditions in the specification are met.

7. A matching means according to claim 6, **characterised in that** the receiving means (31) is adapted to receive the message and the claim specification form the first Presence Server (11).

8. A matching means according to claim 6 or 7, **characterised in that** the storing means is adapted to store the message and the claim specification in a data base (17) connected to the matching means.

9. A matching means according to any one of the claims 6-8, **characterised in that** the distributing means (37) is adapted to distribute the message by showing it for the receiver in the presence representation of the sender (1).

10. A matching means according to any one of the claims 6-8, **characterised in that** the distributing means (37) is adapted to provide the message to be sent to the receiver as for example a SMS, an instant message or an e-mail through any kind of network.

11. A presence service system comprising at least one Service Provider (7) and at least one sender (1) and at least one receiver (3,5) both connected to the presence service system directly or through another Service Provider (9), **characterised in that** the service provider (7) comprises a matching means according to any one of the claims 6-10.

## Patentansprüche

1. Ein Verfahren zum Verteilen von Nachrichten in einem Präsenz-Dienst-System, mit dem mindestens ein Sender (1) und mindestens ein Empfänger (3,5) direkt oder über ein anderes Präsenz-Dienst-System verbunden sind, **gekennzeichnet durch** die Schritte:
- Senden von dem Sender (1) zu einem ersten Dienstanbieter (7) einer Nachricht zusammen mit einer Anforderungsspezifikation, wobei die Anforderungsspezifikation bestimmt, unter welchen Bedingungen in dem Präsenzkontext des Empfängers und/oder des Senders die Nachricht verteilt werden soll;
- Speichern der Nachricht und der Anforderungsspezifikation;
- Vergleichen des tatsächlichen Präsenzkontext des Empfängers und/oder des Senders mit der Anforderungsspezifikation;
- Verteilen der Nachricht, wenn die Bedingungen in der Spezifikation erfüllt werden.

2. Ein Verfahren nach Anspruch 1, **dadurch gekennzeichnet, dass** sowohl der Sender als auch der/die Empfänger sich für die Präsenz des anderen subskribieren.

3. Ein Verfahren nach Anspruch 1 oder 2, **gekennzeichnet durch** Verteilen der Nachricht zu dem/den Empfänger(n), der/die den angefragten Präsenzkontext aufweist/aufweisen.

4. Ein Verfahren nach einem der Ansprüche 1-3, **gekennzeichnet durch** Verteilen der Nachricht **durch** Zeigen dieser dem Empfänger in der Präsenzrepräsentation des Senders.

5. Ein Verfahren nach einem der Ansprüche 1-3, **dadurch gekennzeichnet, dass** das Verteilen der Nachricht das Anbieten der zu versendenden Nachricht für den Empfänger als zum Beispiel eine SMS, eine Sofort-Nachricht oder eine E-Mail über ein Netzwerk einer beliebigen Art umfasst.

6. Eine Abgleicheinrichtung, die verbindbar ist mit mindestens einem Präsenz-Server (11) in einem Präsenz-Dienst-System, mit dem mindestens ein Sender (1) und mindestens ein Empfänger (3,5) direkt oder über einen anderen Präsenz-Server (13) verbunden sind, **gekennzeichnet durch** umfassen
- einer Empfangseinrichtung (31), die angepasst ist zum Empfangen einer Nachricht zusammen mit einer Anforderungsspezifikation vom Sender (1), wobei die Anforderungsspezifikation bestimmt, unter welchen Bedingungen in dem PräsenzKontext des Empfängers und/oder des Senders die Nachricht verteilt werden soll;
- eine Speichereinrichtung (33), die angepasst ist zum Speichern der Nachricht und der Anforderungsspezifikation;
- eine Abgleicheinheit (35), die angepasst ist zum Vergleichen des momentanen Präsenzkontext des Empfängers und/oder des Senders mit der Anforderungsspezifikation;
- eine Verteilungseinrichtung (37), die angepasst ist zum Verteilen der Nachricht, wenn die Bedingungen in der Spezifikation erfüllt sind.

7. Eine Abgleicheinrichtung nach Anspruch 6, **dadurch gekennzeichnet, dass** die Empfangseinrichtung (31) angepasst ist zum Empfangen der Nachricht und der Anforderungsspezifikation von dem ersten Präsenz-Server (11).

8. Eine Abgleicheinrichtung nach Anspruch 6 oder 7, **dadurch gekennzeichnet, dass** die Speichereinrichtung angepasst ist zum Speichern der Nachricht und der Anforderungsspezifikation in einer Datenbank (17), die mit der Abgleicheinrichtung verbunden ist.

9. Eine Abgleicheinrichtung nach einem der Ansprüche 6-8, **dadurch gekennzeichnet, dass** die Verteilungseinrichtung (37) angepasst ist zum Verteilen der Nachricht durch Zeigen dieser dem Empfänger in der Präsenzrepräsentation des Senders (1).

10. Eine Abgleicheinrichtung nach einem der Ansprüche 6-8, **dadurch gekennzeichnet, dass** die Verteilungseinrichtung (37) angepasst ist zum Bereitstellen der zum Empfänger zu versendenden Nachricht als zum Beispiel eine SMS, eine Sofort-Nachricht oder eine E-Mail über ein Netzwerk einer beliebigen Art.

11. Ein Präsenz-Dienst-System umfassend mindestens einen Dienstanbieter (7) und mindestens einen Sender (1) und mindestens einen Empfänger (3,5), die beide mit dem Präsenz-Dienst-System direkt oder über einen anderen Dienstanbieter (9) verbunden sind, **dadurch gekennzeichnet, dass** der Dienstanbieter (7) eine Abgleicheinrichtung gemäß einem der Ansprüche 6-10 umfasst.

## Revendications

1. Procédé de distribution de messages dans un système de service de présence auquel au moins un expéditeur (1) et au moins un destinataire (3, 5) sont connectés directement ou par l'intermédiaire d'un autre système de service de présence, **caractérisé par** les étapes consistant à :
- émettre depuis l'expéditeur (1) vers un premier Fournisseur de Services (7) un message avec une spécification de demande, ladite spécification de demande déterminant dans quelles conditions doit être distribué le message, dans le contexte de présence du destinataire et/ou de l'expéditeur;
- stocker ledit message et ladite spécification de demande;
- comparer le contexte de présence courant du destinataire et/ou de l'expéditeur avec la spécification de demande ;
- distribuer le message lorsque sont réunies les conditions de la spécification.

2. Procédé selon la revendication 1, **caractérisé en ce que** l'expéditeur et le destinataire souscrivent tous les deux à la présence de l'autre.

3. Procédé selon la revendication 1 ou 2, **caractérisé en ce que** le message est distribué au ou aux destinataires ayant le contexte de présence spécifié.

4. Procédé selon l'une quelconque des revendications 1 à 3, **caractérisé en ce que** le message est distribué en le montrant au destinataire dans une représentation de la présence de l'expéditeur.

5. Procédé selon l'une quelconque des revendications 1 à 3, **caractérisé en ce que** la distribution du message comprend la fourniture du message à émettre au destinataire sous la forme de, par exemple, un SMS, un message instantané ou un courrier électronique, via n'importe quel type de réseau.

6. Moyen adaptateur pouvant être connecté à au moins un Serveur de Présence (11) dans un système de service de présence auquel au moins un expéditeur (1) et au moins un destinataire (3, 5) sont connectés directement ou par l'intermédiaire d'un autre serveur de présence, **caractérisé en ce qu'**il comprend:
- un moyen de réception (31), conçu pour recevoir de l'expéditeur (1) un message avec une spécification de demande, ladite spécification de demande déterminant dans quelles conditions doit être distribué le message, dans le contexte de présence du destinataire et/ou de l'expéditeur ;
- un moyen de stockage (33), conçu pour stocker ledit message et ladite spécification de demande;
- une unité adaptateur (35), conçue pour comparer le contexte de présence courant du destinataire et/ou de l'expéditeur avec la spécification de demande ;
- un moyen de distribution (37), conçu pour distribuer le message lorsque sont réunies les conditions de la spécification.

7. Moyen adaptateur selon la revendication 6, **caractérisé en ce que** le moyen de réception (31) est conçu pour recevoir le message et la spécification de demande en provenance du premier Serveur de Présence (11).

8. Moyen adaptateur selon la revendication 6 ou 7, **caractérisé en ce que** le moyen de stockage est conçu pour stocker le message et la spécification de demande dans une base de données (17) connectée au moyen adaptateur.

9. Moyen adaptateur selon l'une quelconque des revendications 6 à 8, **caractérisé en ce que** le moyen de distribution (37) est conçu pour distribuer le message en le montrant au destinataire dans une représentation de la présence de l'expéditeur (1).

10. Moyen adaptateur selon l'une quelconque des revendications 6 à 8, **caractérisé en ce que** le moyen de distribution (37) est conçu pour fournir le message qui doit être expédié au destinataire sous la forme de, par exemple, un SMS, un message instantané ou un courrier électronique, via n'importe quel type de réseau.

11. Système de service de présence comprenant au moins un Fournisseur de Services (7), ainsi que au moins un expéditeur (1) et au moins un destinataire (3, 5) tous deux connectés au système de service de présence, directement ou par l'intermédiaire d'un autre Fournisseur de Services (9), **caractérisé en ce que** le Fournisseur de Services (7) comprend un moyen de comparaison selon l'une quelconque des revendications 6 à 10.
